# EUROPEAN PATENT APPLICATION

(11) **EP 3 364 270 A1**
(43) Date of publication of application: **22.08.2018**
(21) Application number: 16855180.2
(22) Date of filing: 23.08.2016
(51) Int. Cl.: G06F 3/01, G06F 3/0484

(54) **INFORMATION PROCESSING DEVICE AND INFORMATION PROCESSING METHOD**

(30) Priority: 15.10.2015 JP 2015204031
(71) Applicant: Sony Corporation, Tokyo 108-0075 (JP)
(72) Inventor: NASHIDA, Tatsushi, Tokyo 108-0075 (JP)
(74) Representative: MFG Patentanwälte Meyer-Wildhagen Meggle-Freund Gerhard PartG mbB
(86) International application number: PCT/JP2016/074510
(87) International publication number: WO 2017/064926

(57) **Abstract**

An information processing device that mediates interactions between information and a user in a VR space is provided.

When the user who is looking at a ground-level view in the VR space looks up while remaining in a seated posture, a target mark appears in the sky of the VR space. In this state, if the user further performs a "jump action" of making short up-and-down motions of the torso, the VR space switches to a view from the sky. If the user repeats the action of looking up at the sky and performing the jump action while the target mark is visible, it is possible to move the VR space even higher in the sky.

## Description

### Technical Field

The technology disclosed in this specification relates to an information processing device and an information processing method that mediates interactions between a user and information, and for example, relates to an information processing device and an information processing method that mediates interactions between information in a virtual reality (VR) space in which a first-person view or the like is viewed, and a user.

### Background Art

There is known a technology that allows a user to access a sight seen by a person/object other than the user (sight seen by a mobile body other than the user).

For example, there has been proposed a mobile camera system that remotely acquires an image captured by a mobile camera mounted on a mobile body such as a vehicle (e.g., see Patent Literature 1). Further, there has been proposed an image processing system that provides, to a person who wears a head-mounted display, information similar to visual information acquired by a person who wears eyeglasses including an imaging sensing wireless device (e.g., see Patent Literature 2). Furthermore, there has been proposed an image display system in which a display device for displaying a captured image of a mobile body specifies, with respect to an imaging device of the mobile body, a point-of-sight position and line-of-sight direction in which an image is captured and a speed at the time of capturing an image (e.g., see Patent Literature 3).

Furthermore, telepresence technology that provides an interface for transmitting a sense of being in a location while also operating an object in a remote location through an interval such as the vision of a robot in the remote location has been proposed (see Patent Literature 4, for example).

### Citation List

### Patent Literature

Patent Literature 1: JP 2006-186645A
Patent Literature 2: JP 2004-222254A
Patent Literature 3: JP 2008-154192A
Patent Literature 4: JP 2014-522053T
Patent Literature 5: JP 2014-104185A
Patent Literature 6: JP 2015-81965A
Patent Literature 7: JP 2012-58679A

### Disclosure of Invention

### Technical Problem

An objective of the technology disclosed in this specification is to provide an excellent information processing device and information processing method capable of mediating interactions between information in a VR space and a user.

### Solution to Problem

The technology disclosed in the present specification is devised in view of the above-described problem, and a first aspect thereof is an information processing device including: a detection unit configured to detect an action of a user; and an input unit configured to input an instruction to move from the user in a VR space on a basis of the detected action.

According to a second aspect of the technology disclosed in the present specification, the detection unit of the information processing device according to the first aspect is configured to detect an action while the user remains in a seated posture, and the input unit is configured to input the instruction to move in the VR space on a basis of the action while the user remains in the seated posture.

According to a third aspect of the technology disclosed in the present specification, the input unit of the information processing device according to the second aspect is configured to input an instruction to move in a direction in which a head or a torso of the user is tilted.

According to a fourth aspect of the technology disclosed in the present specification, the input unit of the information processing device according to the first aspect is configured to input, as an instruction to move to a sky, an action of the user facing up and also making an up-and-down motion of a torso.

According to a fifth aspect of the technology disclosed in the present specification, the input unit of the information processing device according to the first aspect is configured to input an action of the user facing down and also making an up-and-down motion of a torso while in a sky of the VR space as an instruction to move to a ground.

According to a sixth aspect of the technology disclosed in the present specification, the input unit of the information processing device according to the first aspect is configured to input an action of the user facing to a front and also making an up-and-down motion of a torso as an instruction to move in a frontal direction.

According to a seventh aspect of the technology disclosed in the present specification, the information processing device according to the first aspect further includes: a display unit configured to display an image of a VR space.

According to an eighth aspect of the technology disclosed in the present specification, the display unit of the information processing device according to the seventh aspect is configured to switch a view of the VR space on a basis of the instruction to move input by the input unit.

According to a ninth aspect of the technology disclosed in the present specification, the display unit of the information processing device according to the seventh aspect is configured to display a target mark in a direction in which the user faces, the direction being detected by the detection unit.

According to a tenth aspect of the technology disclosed in the present specification, the input unit of the information processing device according to the ninth aspect is configured to input, as an instruction to move to a spot where the target mark is displayed, an action of the user making an up-and-down motion of a torso, and the display unit is configured to make a switch to a view of the spot where the target mark is displayed.

According to an eleventh aspect of the technology disclosed in the present specification, the display unit of the information processing device according to the eighth aspect is configured to display a predetermined effect line when switching the view.

According to a twelfth aspect of the technology disclosed in the present specification, the display unit of the information processing device according to the tenth aspect is configured to impart a visual effect originating from the target mark when switching the view.

According to a thirteenth aspect of the technology disclosed in the present specification, the display unit of the information processing device according to the eighth aspect is configured to apply blur when switching the view.

According to a fourteenth aspect of the technology disclosed in the present specification, the display unit of the information processing device according to the seventh aspect is configured to display a shadow on a ground when the user looks down at the VR space from a sky.

In addition, a fifteenth aspect of the technology disclosed in the present specification is an information processing method including: a detection step of detecting an action of a user; and an input step of inputting an instruction to move from the user in a VR space on a basis of the detected action.

### Advantageous Effects of Invention

According to the technology disclosed in this specification, it is possible to provide an excellent information processing device and information processing method capable of mediating interactions between information in a VR space and a user.

Note that the advantageous effects described in this specification are merely for the sake of example, and the advantageous effects of the present invention are not limited thereto. Furthermore, in some cases the present invention may also exhibit additional advantageous effects other than the advantageous effects given above.

Further objectives, features, and advantages of the technology disclosed in this specification will be clarified by a more detailed description based on the exemplary embodiments discussed hereinafter and the attached drawings.

### Brief Description of Drawings

[FIG. 1] FIG. 1 illustrates an overview of a visual information sharing system 100 to which a technology disclosed in the present specification is applied.
[FIG. 2] FIG. 2 schematically illustrates a network topology of 1 to N.
[FIG. 3] FIG. 3 schematically illustrates a network topology of N to 1.
[FIG. 4] FIG. 4 schematically illustrates a network topology of N to N.
[FIG. 5] FIG. 5 illustrates a functional configuration example of an image provision device 101 and an image display device 102.
[FIG. 6] FIG. 6 is a diagram illustrating an exemplary installation of a dome-type display in the case of viewing a first-person view of a Body facing nearly to the front.
[FIG. 7] FIG. 7 is a diagram illustrating an exemplary installation of a dome-type display in the case of viewing a first-person view of a Body looking to the front and slightly upward.
[FIG. 8] FIG. 8 is a diagram illustrating an exemplary configuration of a dome-type display accommodating two users at the same time.
[FIG. 9] FIG. 9 is a diagram illustrating an example of a guidance image for machine learning.
[FIG. 10] FIG. 10 is a diagram illustrating an example of a guidance image for machine learning.
[FIG. 11] FIG. 11 is a diagram illustrating an example of a guidance image for machine learning.
[FIG. 12] FIG. 12 is a diagram illustrating an example of a forward lean action that gives an instruction to move forward in the VR space while the user remains in a seated posture.
[FIG. 13] FIG. 13 is a diagram illustrating an example of a backward lean action that gives an instruction to move backward in the VR space while the user remains in a seated posture.
[FIG. 14] FIG. 14 is a diagram for describing a jump UI.
[FIG. 15] FIG. 15 is a diagram for describing a jump UI.
[FIG. 16] FIG. 16 is a diagram for describing a jump UI.
[FIG. 17] FIG. 17 is a diagram for describing a jump UI.
[FIG. 18] FIG. 18 is a diagram for describing a microjump UI.
[FIG. 19] FIG. 19 is a diagram for describing a microjump UI.
[FIG. 20] FIG. 20 is a diagram illustrating an exemplary configuration of a display using projection mapping.
[FIG. 21] FIG. 21 is a diagram illustrating a conceptual diagram of a visual sharing system including a Ghost who uses a dome-type display.

### Mode(s) for Carrying Out the Invention

Hereinafter, an embodiment of the technology disclosed in the present specification will be described in detail with reference to the drawings.

### A. System configuration

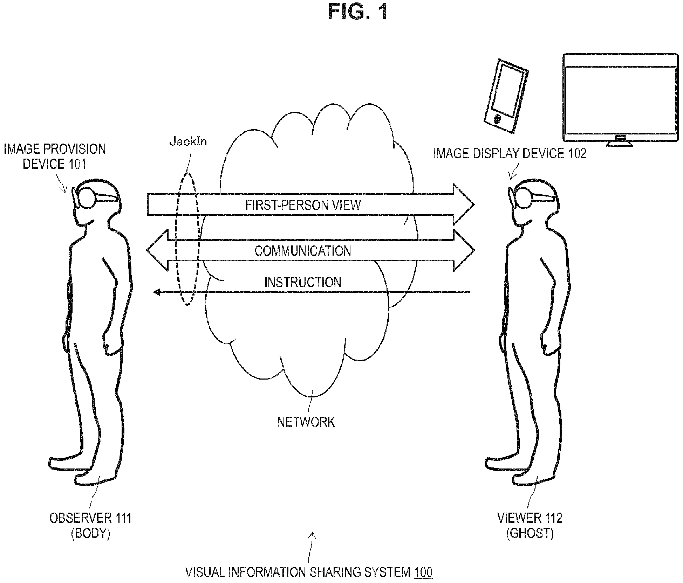

FIG. 1 illustrates an overview of a visual information sharing system 100 to which the technology disclosed in the present specification is applied. The visual information sharing system 100 illustrated in FIG. 1 is configured by combining an image provision device 101 for providing an image obtained by capturing an image of a site and an image display device 102 for displaying the image provided from the image provision device 101.

The image provision device 101 specifically includes a camera-equipped see-through head-mounted display mounted on a head part of an observer 111 who actually acts on a site. The "see-through" head-mounted display herein is basically optical transmissive but may be a video see-through head-mounted display. The camera provided in the head-mounted display captures an image of a substantially line-of-sight direction of the observer 111 and provides a first pereson view (FPV) thereof.

Meanwhile, the image display device 102 is assumed to be arranged separately from the site, i.e., from the image provision device 101, and the image provision device 101 and the image display device 102 are assumed to communicate with each other via a network. The term "separately" herein includes not only a remote location but also a situation in which the image provision device 101 and the image display device 102 are slightly (e.g., approximately several meters) separate in the same room. Further, the image provision device 101 and the image display device 102 are also assumed to exchange data via a server (not illustrated).

The image display device 102 is a display device by which, for example, a person not on the site (a viewer of a captured image) 112 views the first-person view of the observer 111. If the image display device 102 is a device capable of displaying an image with a wide angle of view, such as a dome-type display that displays an image on the internal circumference of a hemisphere or an immersive head-mounted display, for example, the viewer 112 is able to experience the same sight as the observer 111 more realistically.

However, the image display device 102 is not limited to a device that displays a wide-angle image, and may also be a see-through head-mounted display or a wristwatch-style display. Alternatively, the image display device 102 is not required to be a wearable terminal, and may also be a multifunctional information terminal such as a smartphone or tablet, a typical monitor display such as a computer screen or a television receiver, a game console, or the like.

Because the observer 111 is actually on the site and acts with his/her body, the observer 111 who is a user of the image provision device 101 (or the image provision device 101) will also be referred to as "Body" hereinafter. Meanwhile, the viewer 112 does not act with his/her body on the site but is conscious of being on the site by viewing a first-person view of the observer 111, and therefore the viewer 112 who is a user of the image display device 102 (or the image display device 102) will also be referred to as "Ghost" hereinafter.

A Body transmits the own peripheral situation to a Ghost and further shares the situation with the Ghost. Meanwhile, the Ghost communicates with the Body and thus can achieve interactions such as work assistance from a separate location. Immersing the Ghost in a first-person experience of the Body to allow the Ghost to perform interactions in the visual information sharing system 100 will also be referred to as "JackIn" hereinafter.

The visual information sharing system 100 basically has a function of transmitting a first-person view from the Body to the Ghost to allow the Ghost to view and experience the first-person view and a function of allowing the Body and the Ghost to communicate with each other. By using the latter communication function, the Ghost can interact with the Body by intervention from a remote location, such as "visual intervention" that allows the Ghost to intervene in vision of the Body, "auditory intervention" that allows the Ghost to intervene in an auditory sensation of the Body, "body intervention" that allows the Ghost to move or stimulate a body of the Body or a part of the body, and "alternative conversation" that allows the Ghost to speak on a site, instead of the Body. It can also be said that Jackln has a plurality of communication channels such as "visual intervention", "auditory intervention", "body intervention", and "alternative conversation". Details of "visual intervention", "auditory intervention", "body intervention", and "alternative conversation" will be described below.

The Ghost can instruct the Body on behavior on a site through "visual intervention", "auditory intervention", "body intervention", or "alternative conversation". For example, the visual information sharing system 100 can be utilized for work assistance in various industrial fields such as a medical site of a surgical operation and the like and a construction site of a construction work and the like, instructions on control of airplanes and helicopters and guidance thereof, navigation of drivers of automobiles, coaching or instruction in sports, and other uses.

For example, not only in a case where the Body desires to share the own vision with another person but also in a case where the Body desires (or needs) to be assisted, instructed, guided, and navigated by another person regarding operation that the Body currently performs through the visual intervention or the like, the Body takes the initiative in implementing Jackln with an appropriate Ghost (Body initiative start).

Further, not only in a case where the Ghost desires to view a video on a site (first-person view of another person) without visiting the site but also in a case where the Ghost desires (or needs) to assist, instruct, guide, and navigate another person regarding operation that the person currently performs, the Ghost takes the initiative in implementing JackIn with a corresponding Body (Ghost initiative start).

Note that, when the Body is unlimitedly subjected to visual intervention, auditory intervention, body intervention, or conversational intervention, the own behavior may be interrupted by the Ghost, or the own behavior may be hindered and is therefore dangerous, and, in some cases, the Body's privacy is invaded. Meanwhile, the Ghost may also have some videos that the Ghost does not desire to view, or, in some cases, cannot provide services such as appropriate assistance, instruction, guidance, and navigation to the Body even in a case where the Ghost is asked to. Therefore, JackIn to the Body by the Ghost and intervention in the Body by the Ghost in a JackIn state may be limited at a certain level.

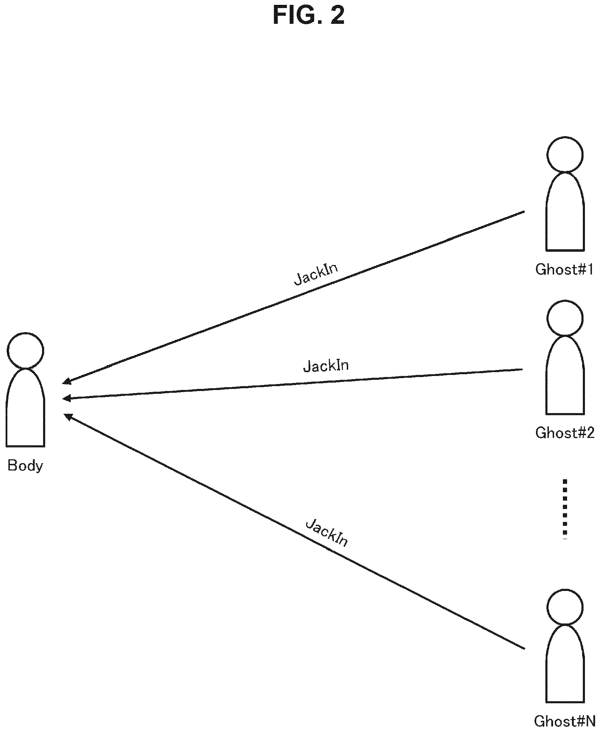

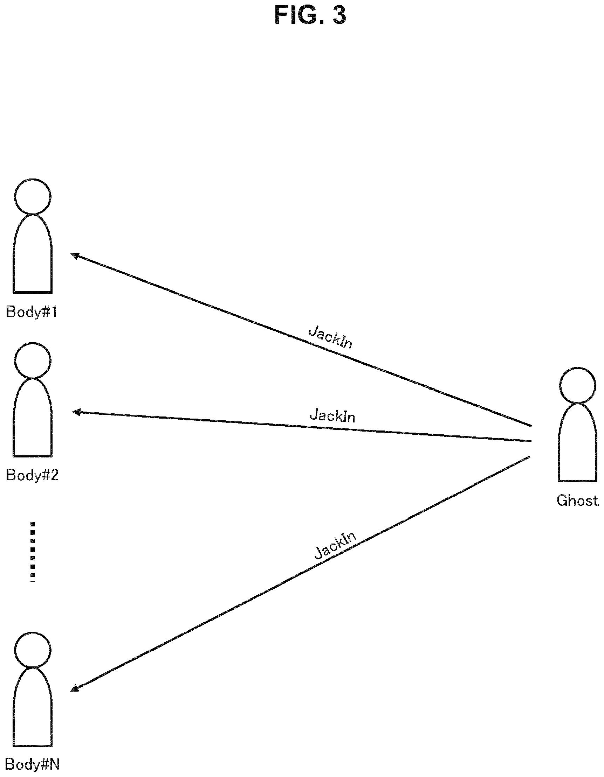

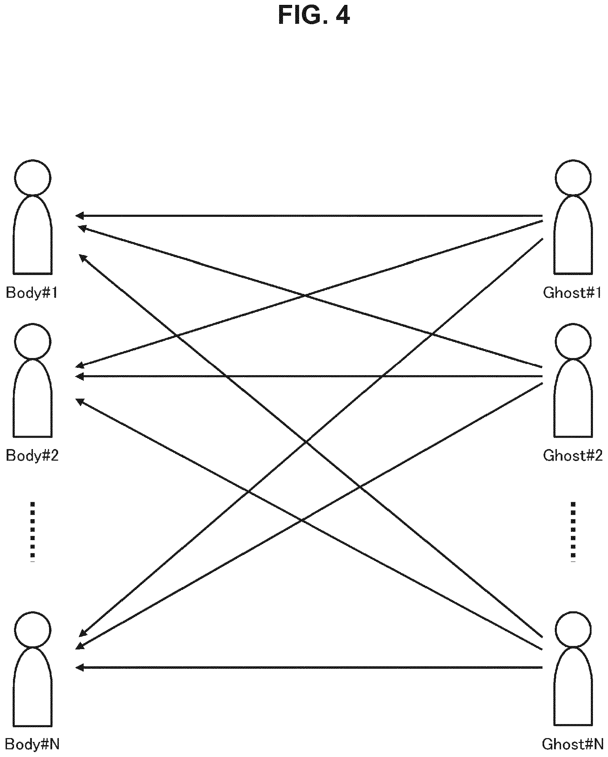

Note that, for simplification, FIG. 1 illustrates a network topology of a single Body to a single Ghost, i.e., in which only a single image provision device 101 and a single image display device 102 exist. The following are also assumed: a network topology of 1 to N in which a single Body and a plurality (N) of Ghosts simultaneously perform JackIn as illustrated in FIG. 2; a network topology of N to 1 in which a plurality (N) of Bodies and a single Ghost simultaneously perform JackIn as illustrated in FIG. 3; and a network topology of N to N in which a plurality (N) of Bodies and a plurality (N) of Ghosts simultaneously perform JackIn as illustrated in FIG. 4.

Further, switching a single device from a Body to a Ghost, switching a single device from a Ghost to a Body, and simultaneously having a role of a Body and a role of a Ghost are also assumed. There is also assumed a network topology (not illustrated) in which a single device performs JackIn to a Body as a Ghost and, at the same time, functions as a Body for another Ghost, i.e., three or more devices are daisy-chain connected. In any network topology, a server (not illustrated) may be interposed between a Body and a Ghost.

### B. Functional configuration

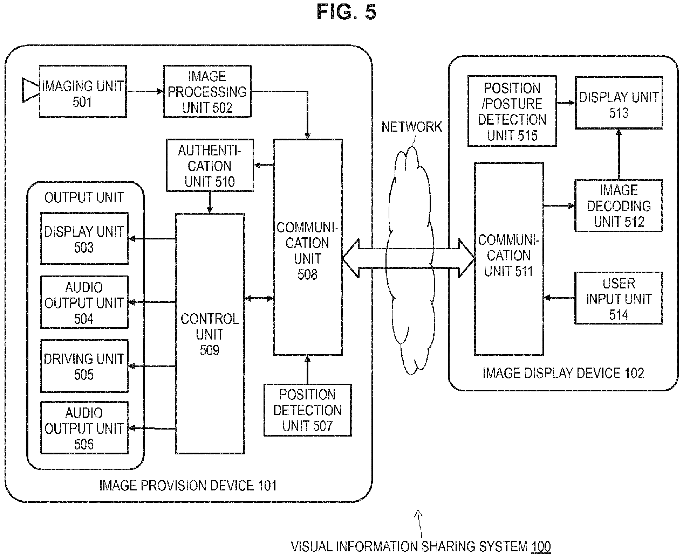

FIG. 5 illustrates a functional configuration example of the image provision device 101 and the image display device 102.

The image provision device 101 is a device to be used by a user (observer 112) who takes a role as a Body. In the example illustrated in FIG. 5, the image provision device 101 includes an imaging unit 501, an image processing unit 502, a display unit 503, a first audio output unit 504, a drive unit 505, and a second audio output unit 506 serving as an output unit, a position detection unit 507, a communication unit 508, a control unit 509, and an authentication unit 510.

The imaging unit 501 includes a camera for capturing an image of a first-person view of the Body. The imaging unit 501 is attached to the head part of the observer 111 so as to capture an image of, for example, a line-of-sight direction of the Body, i.e., the observer 111. Alternatively, a whole-sky camera may be used as the imaging unit 501 to provide a 360-degree whole-sky image of an environment around the Body. However, the whole-sky image does not necessarily need to be a 360-degree image, and a field of view may be narrower. Further, the whole-sky image may be a hemispherical image that does not include a floor surface containing little information (The same applies hereinafter.).

The image processing unit 502 processes image signals output from the imaging unit 501. In a case where the image of the first-person view of the Body captured by the imaging unit 501 is streamed as it is, the Ghost views a video that shakes strongly because the Body looks out over a surrounding environment on his/her own and changes a line-of-sight direction. Thus, health hazards such as virtual reality (VR) sickness and motion sickness are a matter of concern. Further, the Ghost may desire to view a part on which the Body does not focus. In view of this, the image processing unit 502 simulatively forms a surrounding space on the basis of continuous images of the first-person view of the Body captured by the imaging unit 501. Specifically, the image processing unit 502 performs space recognition based on simultaneous localization and mapping (SLAM) recognition technology or the like in real time with respect to a video (whole-sky image) captured by the imaging unit 501 and spatially joins a current video frame and a past video frame together, thereby rendering a video seen from a viewpoint of a virtual camera controlled by the Ghost. The video rendered at the viewpoint of the virtual camera is a video seen from a viewpoint that is simulatively out of a body of the Body rather than the first-person view of the Body. Therefore, the Ghost can observe an environment around the Body independently from motion of the Body. This makes it possible to stabilize shaking of the video to prevent VR sickness and view a part on which the Body does not focus.

The display unit 503 displays and outputs information transmitted from the image display device 102, thereby allowing the Ghost to intervene in vision of the Body. In a case where the image provision device 101 is a see-through head-mounted display as described above, the display unit 503 superimposes and displays an augmented reality (AR) image that expresses consciousness of the Ghost who shares a first-person experience with the Body on vision of the observer 111 (i.e., scene of a real world). The AR image includes images such as a pointer, an annotation, or the like showing a location indicated by the Ghost. Therefore, the Ghost can communicate with the Body to intervene in the vision thereof, thereby interacting with the Body on a site.

The first audio output unit 504 includes, for example, earphones, headphones, or the like and causes the Body to listen to information transmitted from the image display device 102, thereby allowing the Ghost to intervene in an auditory sensation of the Body. The image display device 102 transmits information regarding consciousness of the Ghost who shares a first-person experience with the Body. The image provision device 101 converts received information into audio signals and outputs audio from the first audio output unit 504, thereby causing the Body, i.e., the observer 111 to listen to the audio. Alternatively, audio signals uttered by the Ghost who currently has a first-person experience are transmitted from the image display device 102 as they are. The image provision device 101 outputs the received audio signals in the form of audio from the first audio output unit 504 as they are, thereby causing the Body, i.e., the observer 111 to listen to the audio. Further, volume, quality, an output timing, and the like of audio output from the first audio output unit 504 may be appropriately adjusted. Alternatively, image information or text information transmitted from the image display device 102 may be converted into audio signals and be output in the form of audio from the first audio output unit 504. Therefore, the Ghost can communicate with the Body to intervene in the auditory sensation thereof, thereby interacting with the Body on a site.

The drive unit 505 moves or stimulates the body of the Body or a part of the body, thereby allowing the Ghost to intervene in the body of the Body. The drive unit 505 includes, for example, an actuator for applying tactile sensations or electrical stimulation (which is slight and thus does not harm health) to the body of the observer 111. Alternatively, the drive unit 505 includes a device (e.g., see Patent Literature 5) for supporting or restricting motion of the body by driving a powered exoskeleton or exoskeleton worn on arms, hands, legs, or the like of the observer 111. Therefore, the Ghost can communicate with the Body to intervene in the body thereof, thereby interacting with the Body on a site.

The second audio output unit 506 includes, for example, a wearable speaker or the like worn by the Body and outputs information or audio signals transmitted from the image display device 102 to the outside in the form of audio. The audio output from the second audio output unit 506 is heard on a site as if the Body himself/herself spoke. Therefore, the Ghost can have a conversation with people on a site where the Body exists or can give an instruction with audio, instead of the Body (alternative conversation).

The position detection unit 507 detects current position information of the image provision device 101 (i.e., Body) by using, for example, global positioning system (GPS) signals. The detected position information is used in a case where, for example, the Ghost searches a Body who exists in a location desired by the Ghost.

The communication unit 508, which is mutually connected to the image display device 102 via a network, transmits an image of a first-person view captured by the capturing unit 501 and space information and communicates with the image display device 102. Communication means of the communication unit 508 may be wireless or wired communication means and is not limited to a specified communication standard.

The authentication unit 510 performs authentication processing of the image display device 102 (or the Ghost who is a user thereof) which is mutually connected via a network and determines an output unit for outputting information transmitted from the image display device 102. Then, the control unit 509 controls output operation from the output unit on the basis of a result of authentication by the authentication unit 510. The control unit 509 has, for example, functions corresponding to a central processing unit (CPU) and a graphic processing unit (GPU).

For example, in a case where the image display device 102 is permitted to perform only visual intervention as a result of the authentication processing, the control unit 509 executes only display output from the display unit 503. Further, in a case where the image display device 102 is permitted to perform not only visual intervention but also auditory intervention, the control unit 509 executes both display output from the display unit 503 and audio output from the first audio output unit 504. A range in which the Body permits intervention by the Ghost is defined as a permission level. Meanwhile, a range in which the Ghost intervenes in the Body is defined as a mission level (described below). Note that it is also possible to form the visual information sharing system 100 so that the above processing performed by the authentication unit 510 and the control unit 509 is executed by the server (not illustrated) interposed between the image provision device 101 and the image display device 102, instead of the image provision device 101.

Meanwhile, the image display device 102 is a device to be used by a user (viewer 112) who takes a role as a Ghost. In the example illustrated in FIG. 5, the image display device 102 includes a communication unit 511, an image decoding unit 512, a display unit 513, a user input unit 514, and a position/posture detection unit 515.

The communication unit 511, which is mutually connected to the image provision device 101 via a network, receives a first-person view from the image provision device 101 and communicates with the image provision device 101. Communication means of the communication unit 511 may be wireless or wired communication means and is not limited to a specified communication standard. However, the communication means is compatible with the communication unit 508 of the image provision device 101.

The image decoding unit 512 performs decoding processing of image signals that the communication unit 511 receives from the image provision device 101. The display unit 513 displays and outputs the whole-sky image (first-person view of the Body) which has been decoded in the image decoding unit 512. Note that the processing for rendering a video seen from a viewpoint out of the body of the Body (described above) from the first-person view of the Body may be performed by the image decoding unit 512, instead of the image processing unit 502 of the image provision device 101.

The position/posture detection unit 515 detects a position and posture of a head part of the viewer 112. The detected position and posture correspond to a current viewpoint position and line-of-sight direction of the Ghost. A viewpoint position and line-of-sight direction of the virtual camera (described above) to create a video seen from a viewpoint simulatively out of the body of the Body on the basis of the first-person view of the Body can be controlled on the basis of the position and posture of the head part of the viewer 112 detected by the position/posture detection unit 515.

Note that the position/posture detection unit 515 can be configured by combining multiple sensor elements, such as a gyro sensor, an acceleration sensor, and a geomagnetic sensor, for example. As an example, a 3-axis gyro sensor, a 3-axis acceleration sensor, and a 3-axis geomagnetic sensor may be combined to configure a sensor capable of detecting a total of 9 axes, and the sensor may be applied to the position/posture detection unit 515.

The display unit 513 includes, for example, a head-mounted display worn by the viewer 112 serving as a Ghost. By using an immersive head-mounted display as the display unit 513, the viewer 112 can experience the same sight as that of the observer 111 with more reality. A video viewed by the viewer 112, i.e., the Ghost is not the first-person view of the Body itself but is a surrounding space simulatively formed on the basis of continuous images of the first-person view (video seen from a viewpoint simulatively out of the body of the Body) (described above). Further, it is possible to perform control so that the virtual camera performs head tracking of the Ghost, i.e., follows the viewpoint position and line-of-sight direction of the viewer 112 detected by the position/posture detection unit 515, thereby moving an angle of view of display on the display unit 513.

The display unit 513 may be a wearable terminal such as a see-through head-mounted display or a wrist-watch display, instead of an immersive head-mounted display. Alternatively, the display unit 513 does not need to be a wearable terminal and may be a multifunctional information terminal such as a smartphone or a tablet, a general monitor display such as a computer screen or a television receiver, a game console, a projector for projecting an image on a screen, or the like.

The user input unit 514 is a device for allowing the viewer 112 serving as a Ghost to input the Ghost's own intention or consciousness in response to observation of the first-person view of the Body displayed on the display unit 513.

The user input unit 514 includes, for example, a coordinate input device such as a touchscreen, a mouse, or a joystick. By touching, click operation of the mouse, or the like, the Ghost can directly indicate a location in which the Ghost is particularly interested on a screen that displays the first-person view of the Body. The Ghost gives an indication on pixel coordinates of a video that the Ghost currently views. However, a captured video of the Body always changes, and therefore an indication on the pixel coordinates is meaningless. In view of this, the user input unit 514 specifies, by image analysis or the like, position information on a three-dimensional space corresponding to a pixel position that the Ghost indicates by touching, click operation, or the like on the screen and transmits the position information in the three-dimensional space to the image provision device 101. Therefore, the Ghost can perform pointing that can be fixed with respect to space rather than the pixel coordinates.

Further, the user input unit 514 may capture eye movement by using an image of a face of the Ghost captured by a camera or an eye potential, calculate a location that the Ghost is gazing at, and transmit information specifying the location to the image provision device 101. Also at that time, the user input unit 514 specifies, by image analysis or the like, position information in the three-dimensional space corresponding to a pixel position that the Ghost is gazing at, and transmits the position information in the three-dimensional space to the image provision device 101. Therefore, the Ghost can perform pointing that can be fixed with respect to space rather than the pixel coordinates.

Further, the user input unit 514 includes a text input device such as a keyboard. When the Ghost has the same first-person experience as that of the Body, the Ghost can input an intention that the Ghost desires to inform the Body, a consciousness that the Ghost has, and the like as text information. The user input unit 514 may transmit the text information input by the Ghost as it is to the image provision device 101 or may convert the text information into other forms of signals such as audio signals and then transmit the signals to the image provision device 101.

Further, the user input unit 514 includes an audio input device such as a microphone and inputs audio uttered by the Ghost. The user input unit 414 may transmit the input audio as they are in the form of audio signals from the communication unit 511 to the image provision device 101. Alternatively, the user input unit 514 may perform audio recognition of the input audio, convert the input audio into text information, and transmit the text information to the image provision device 101.

Further, the user input unit 514 includes an audio input device such as a microphone and inputs audio uttered by the Ghost. The user input unit 414 may transmit the input audio as they are in the form of audio signals from the communication unit 511 to the image provision device 101. Alternatively, the user input unit 514 may perform audio recognition of the input audio, convert the input audio into text information, and transmit the text information to the image provision device 101.

Further, the user input unit 514 may be a gesture input device for inputting body gestures and manual gestures of the Ghost. Means for capturing gestures is not particularly limited. For example, the user input unit 514 may include a camera for capturing an image of movement of the body of the Ghost and an image recognition device for processing the captured image. Further, in order to easily perform image recognition, a marker may be attached to the body of the Ghost. Alternatively, the user input unit 514 includes a gyro sensor or an acceleration sensor attached to the body of the Ghost, and detects the motion of the body of the Ghost.

The user input unit 514 may transmit an input gesture from a communication unit 511 to the image provision device 101 as, for example, control signals to intervene in the body of the Body. Further, the user input unit 514 may convert the input gesture into image information to intervene in the vision of the Body (coordinate information, AR image to be superimposed and displayed, text information, or the like) or audio signals to intervene in the auditory sensation of the Body and transmit the image information or audio signals from the communication unit 511 to the image provision device 101. Further, the user input unit 514 specifies, by image analysis or the like, position information in the three-dimensional space corresponding to a pixel position indicated by a gesture of the Ghost and transmits the position information in the three-dimensional space to the image provision device 101. Therefore, the Ghost can perform pointing that can be fixed with respect to space rather than the pixel coordinates.

Additionally, the user input unit 514 inputs an action of the Ghost obtained on the basis of image analysis of the Ghost photographed with a camera, a detection result of the gyro sensor or acceleration sensor attached to the body of the Ghost, or the like as an instruction to move in the VR space or the like. However, the details of the user interface in the VR space will be deferred to later description.

A service called JackIn developed in the visual information sharing system 100 resembles a general AR technology in view of superimposing and displaying an AR image. However, it is considered that JackIn is different from a normal AR technology performed by a computer in that a human being (Ghost) augments another human being (Body).

Further, JackIn also resembles telepresence (described above). However, normal telepresence and JackIn are different in that normal telepresence is an interface for viewing the world from a viewpoint of a machine such as a robot, whereas, in JackIn, a human being (Ghost) views the world from a viewpoint of another human being (Body). Further, telepresence presupposes that a human being is a master and a machine is a slave and the machine that is the slave truly reproduces motion of the human being. Meanwhile, in a case where a human being (Ghost) performs JackIn to another human being (Body), the Body does not necessarily move in compliance with the Ghost, i.e., is an independent interface.

In the above visual information sharing system 100, a video provided from the image provision device 101 to the image display device 102 is not limited to a real-time video observed by the Body on a site (i.e., a live video captured by the imaging unit 501) and may be a past recorded video. For example, the image provision device 101 includes a mass storage device (not illustrated) for recording a past video, and the past video may be distributed from the image provision device 101. Alternatively, the past video recorded by the image provision device 101 may be accumulated in a JackIn server (provisional name) for controlling JackIn between the Body and the Ghost or another recording server, and the past video may be streamed from the server to the Ghost (image display device 102). Note that, in a case where the Ghost views the past video, no intervention in the Body including visual intervention and auditory intervention is permitted. This is because the video viewed by the Ghost is not a video of a site where the Body currently operates and intervention based on the past video hinders current operation of the Body.

Note that, regarding details of sharing vision between two devices, see also, for example, Patent Application No. 2013-78893, specification, which has already been transferred to the present applicants. Further, regarding details of visual intervention (display of AR image) in the same system 100, see also, for example, Patent Application No. 2013-78892, specification, Patent Application No. 2013-78894, specification, and Patent Application No. 2013-191464, specification, which have already been transferred to the present applicants.

### C. Configuration of image display device

Basically, it is sufficient for the image display device 102 to be provided with a configuration enabling the viewing of a first-person view photographed by the image provision device 101, and if a device by which a wide-angle field of view is obtained, such as a dome-type (hemispherical or aspherical) display or an immersive head-mounted display, is applied to the display unit 514, an image having a higher sense of immediacy can be viewed, and the viewer 112 is able to experience the same sight as the observer 111 more realistically.

Since a head-mounted display can be compact, by simply putting on the head-mounted display, a user is able to begin activity as the Ghost without space restrictions. Conversely, a head-mounted display puts stress on the head, the user feels a sense of being trapped while also easily experiencing VR sickness, making it difficult to work for long periods of time. Also, when the user puts on a head-mounted display, the user becomes immersed in the viewed image, and is almost unable to grasp the surrounding conditions. For this reason, Ghosts who are wearing head-mounted displays do not understand each other's state even when close to each other, and thus cooperative work is considered to be difficult. Also, since the field of view is blocked by the head-mounted display, the wearing user is in a defenseless state.

On the other hand, a dome-type display, although limited in installation location, is not worn on the user's body, and thus is unlikely to induce stress even if work is performed for long periods of time. Also, if the case of assisting work of the Body in parallel with other work is taken into account, not covering the eyes like with a head-mounted display is more efficient. Also, if the size of the dome is increased, two, three or more users (Ghosts) can be accommodated inside the dome at the same time, making it easy to create an environment suited to cooperative work.

As an additional remark, whereas the facial expression of a user wearing a head-mounted display cannot be photographed, the facial expression of a user inside a dome can be photographed, analyzed, and the like.

A dome-type display can be configured as, for example, a dome-type (hemispherical or aspherical) screen, and a display device (projector) including a projection device that projects image light onto a projection surface on the inner side (concave side) of the dome (see Patent Literature 6, for example). A dome-type screen configured to have a folding structure that can be assembled easily is convenient for installation and storage (see Patent Literature 7, for example). Alternatively, a flexible display element may be used to produce a dome-type or aspherical display. Also, small chip-like display elements, although not flexible, may be arranged and used as a polyhedral (close to a curved surface) display.

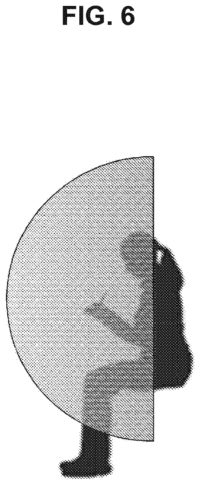

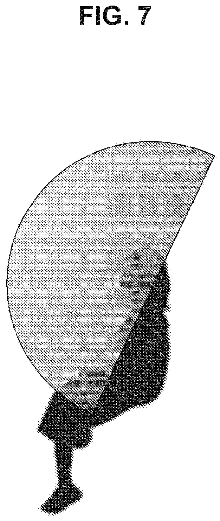

FIGS. 6 to 8 illustrate examples of modes of using a dome-type display as the image display device 102. FIG. 6 illustrates an exemplary installation of a dome-type display in the case of viewing a first-person view of the Body facing nearly to the front. Also, FIG. 7 illustrates an exemplary installation of a dome-type display in the case of viewing a first-person view of the Body looking to the front and slightly upward. A solo dome-type display has a hemispherical screen with a radius of approximately 80 to 100 cm, for example.

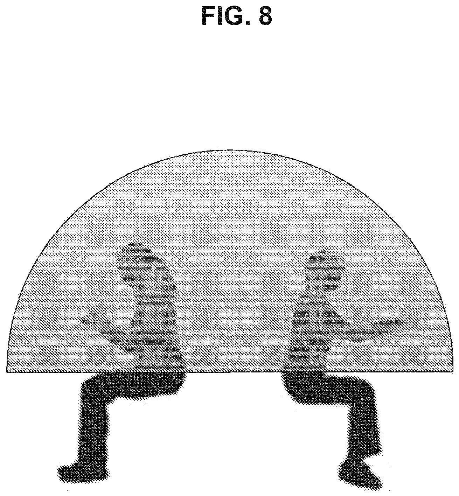

Also, FIG. 8 illustrates an exemplary configuration of a dome-type display accommodating two users at the same time. The ability of two or more users (viewers acting as Ghosts) to share an image transmitted from the Body is a large difference from a head-mounted display, which is based on viewing by a single user. For example, in the case of assisting the work of piloting a large-scale transportation machine such as a large cargo vessel, ferry, or passenger airplane, being able to look around in 360 degrees (full perimeter) as illustrated reduces trouble. Also, by having multiple people view the same image at the same time, errors can be reduced. Note that in the case of wanting to accommodate three or more people, it is sufficient to increase the size of the dome in accordance with the number of people.

In the case of using a dome-type display as the image display device 102, the space inside the dome where VR is display can be partitioned off from the outside world. For example, inside the dome, natural phenomena may be expressed by producing wind and vibration may be produced, or by adjusting the temperature and humidity.

Also, if the dome-type display is combined with a multi-channel audio system, ambient sounds can be insulated against by the dome, and a desired sound image can be localized inside the dome. Consequently, the Ghost is able to attain the same first-person view as the Body, both visually and aurally.

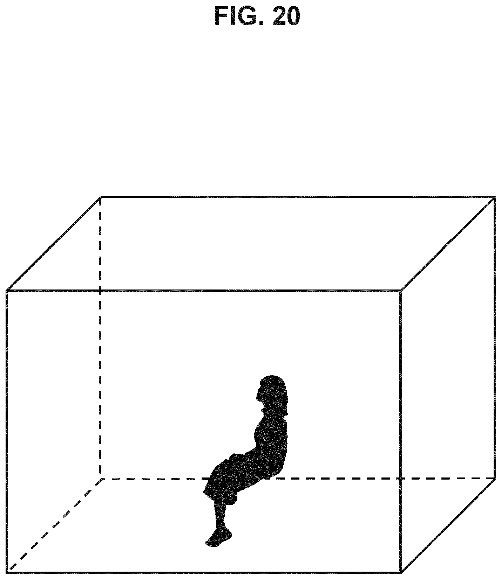

FIG. 20 illustrates a modification of the dome-type display illustrated in FIGS. 6 to 8. The dome-type display may include a dome-type screen and a projector that projects an image onto the concave face of the dome. In contrast, in the example illustrated in FIG. 20, a technique is used in which projection mapping technology is utilized to project an image sent from the Body (image provision device 101) onto the wall surface of a room where a user (Ghost) is present.

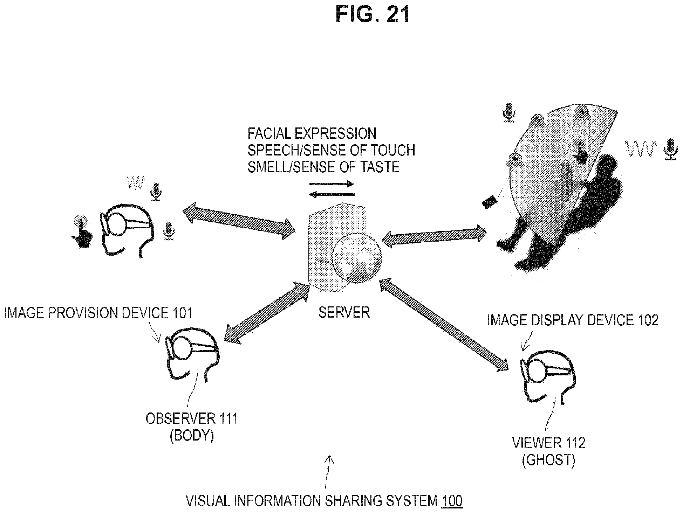

FIG. 21 illustrates a conceptual diagram of a visual sharing system including a Ghost who uses a dome-type display. In the visual sharing system, facial expression and sensations such as the senses of sound, touch, smell, and taste are shared between an observer (Body) and viewers (Ghosts). In the example illustrated in FIG. 21, the visual sharing system is configured so that a Ghost jacks in to the Body through a predetermined server. Also, the range over which intervention from a Ghost to the Body is allowed (permission), is controlled by the server. The dome-type display is able to accommodate one, two, or more viewers (Ghosts) at the same time. For example, the screen (projection surface) of the dome-type display doubles as a touch panel, and a viewer is able to touch the image projected onto the screen directly to achieve interaction with the Body. Also, the dome-type display is provided with one or more cameras set up to be able to photograph an accommodated viewer, a microphone that inputs speech uttered by a viewer, and other environmental sensors, and input signals from these are fed back to the Body.

### E. User interface in VR space

As described above, in the visual information sharing system 100 according to the present embodiment, a first-person view of the observer 111, namely the Body, is delivered from the image provision device 101 to the image display device 102. Additionally, on the image display device 102 side, a dome-type display (see FIGS. 6 to 8) or a head-mounted display is used to display the received image. The viewer 112, namely the Ghost, shares the situation at the site where the Body is present through a VR space displayed on the dome-type display or the like, and by additionally communicating with the Body, is able to achieve interaction, such as work assistance, from a remote location.

As the user interface by which the Ghost interacts with the Body, an existing input device, such as a keyboard and mouse, a touch panel, a joystick, or a game controller may be used. In addition, speech input and gesture input may also be used instead of an input device, or in conjunction with an input device.

In the VR space, having the user's own hands be visible is important for the sake of reality. The hands are expected to be holding an input device like the above. In the case of displaying the VR space on a dome-type display, the user is able to see one's own hands directly. Also, in the case of viewing the VR space on an immersive head-mounted display, a method of displaying the user's hands photographed by a camera overlaid in the VR space is conceivable.

The interaction to perform in the VR space may include spatial movement. For example, there is the case of the Ghost issuing instructions for an action such as walking around, running, or moving to a location where the sense of sight does not reach in the VR space that displays the first-person view of the Body.

Normally, the Ghost's hands have the function of operating an input device or inputting gestures. For this reason, if one attempts to issue a spatial movement instruction with one's hands, there is a problem in that switching the function of the hands causes the input work to become discontinuous, or is associated with unnaturalness.

Also, a method of issuing a spatial movement instruction by having the Ghost perform an action of actually walking around, running, or moving is also conceivable. In the case of viewing the VR space on a dome-type display, moving around inside a narrow dome carries the danger of contacting or colliding with the surrounding equipment. Also, in the case of viewing the VR space on an immersive head-mounted display, it is dangerous to take a standing posture while one's field of view is in a blocked state.

Accordingly, the present specification proposes a user interface enabling a user (Ghost) to issue a comfortable movement instruction in a VR space while remaining in a seated posture.

The user interface detects the facing of the head (or the line-of-sight direction) of the user in a seated state and short up-and-down motions of the torso, and converts these into a spatial movement instruction action. The facing of the user's head and the up-and-down motions of the torso can be detected using the position/posture detection unit 515 attached to the user's head, for example. Alternatively, the facing of the user's head and the torso movement can be detected on the basis of a change in a captured image by a camera which is attached to the user's head and which photographs the line-of-sight direction (for example, if the captured image depicts under the horizontal, the user is understood to be facing downward, whereas if above the horizontal is depicted, the user is understood to be facing upward. Also, if the captured image changes up-and-down, the user is understood to have moved up-and-down).

Also, there is large individual variation among the motions imagined by persons. Even if a value of action data detected on the basis of an analysis result of a sensor or a captured image of a camera is the same, it is often the case that one user intended an action of the head facing upward, whereas another user did not intend such an action.

Additionally, there is similarly large individual variation for actions such as making the head face up or down, or making short up-and-down motions of the torso in a seated posture. Accordingly, to realize a comfortable user interface, it is preferable to make the user (Ghost) perform actions such as making the head face up, face down, and making short up-and-down motions of the torso while remaining in a seated posture a predetermined number of times, and perform matching between the intended actions and the action data, that is, machine learning, in advance.

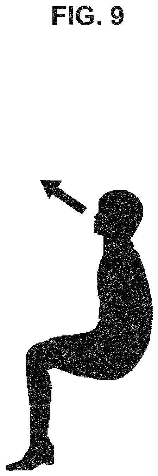

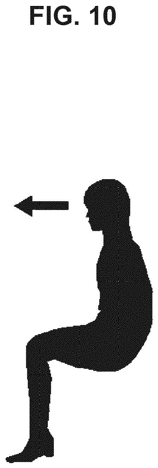

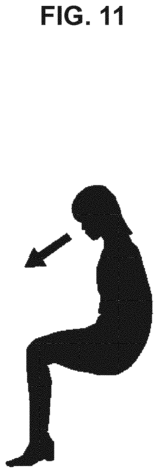

During machine learning, a video (guidance image) giving instructions to perform desired actions such as making the head face up, face to the front, face down, and making short up-and-down motions while remaining in a stead posture may be displayed on a dome-type display or an immersive head-mounted display, and the user may be made to perform bodily motions according to the video. FIGS. 9 to 11 illustrate examples of guidance images for the purpose of machine learning for each of making the head face up, face to the front, and face down.

A user interface that gives instructions to move in the VR space by performing actions while remaining in a seated posture is illustrated by example below.

### E-1. Walk UI, run UI

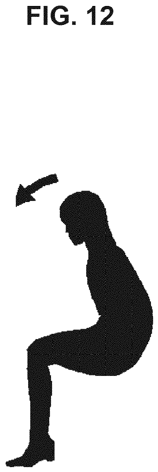

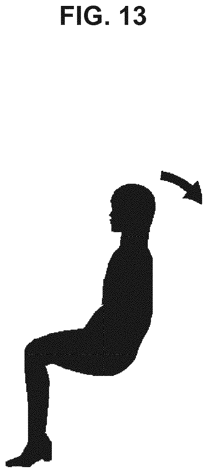

As illustrated in FIG. 12, if the user (Ghost) makes the torso lean forward while remaining in a seated posture, an instruction to move forward in the VR space is given. Also, as illustrated in FIG. 13, if the user makes the torso lean backward while remaining in a seated posture, an instruction to move backward in the VR space is given.

Note that, although omitted from illustration, it is assumed that the user is able to give instructions to move forward and to the left or forward and to the right in the VR space by making the torso lean forward while facing in either the left or the right direction and while remaining in a seated posture. Similarly, it is assumed that the user is able to give instructions to move backward and to the left or backward and to the right in the VR space by making the torso lean backward while facing in either the left or the right direction and while remaining in a seated posture.

### E-2. Jump UI

In a VR space, one does not often look up at the sky or look down at the ground. The jump UI is a user interface that utilizes the sky and the ground which are normally not looked at to realize comfortable movement outside the visible range.

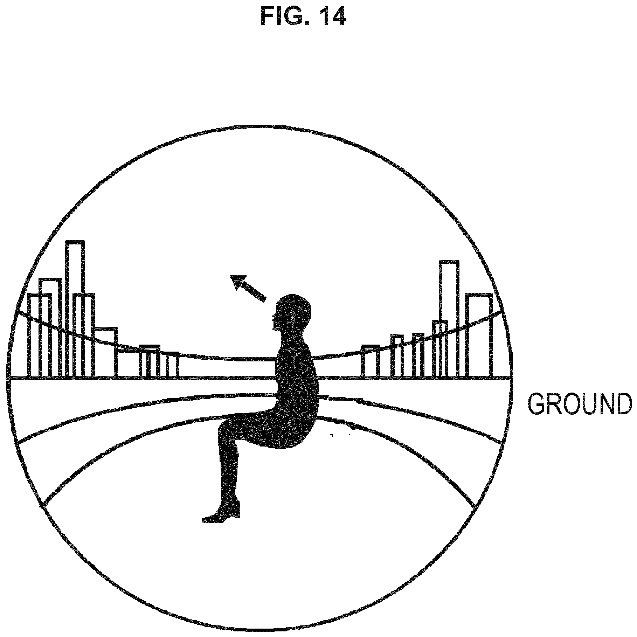

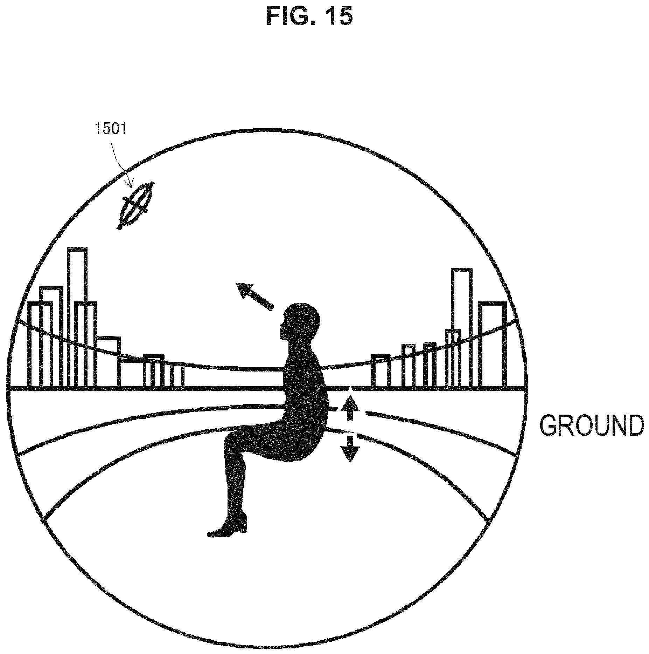

As illustrated in FIG. 14, a user (Ghost) looking at a view on the ground in the VR space faces up while remaining in a seated posture. Subsequently, as illustrated in FIG. 15, in the sky of the VR space, a target mark 1501 appears in the line-of-sight direction of the user. In this way, in the state in which the target mark 1501 is displayed, if the user additionally performs a "jump action" of making short up-and-down motions of the torso, the VR space switches to a view from the sky. Note that, although omitted from illustration, if the user repeats the action of looking up at the sky and performing the jump action while the target mark is visible, it is possible to move the VR space even higher in the sky.

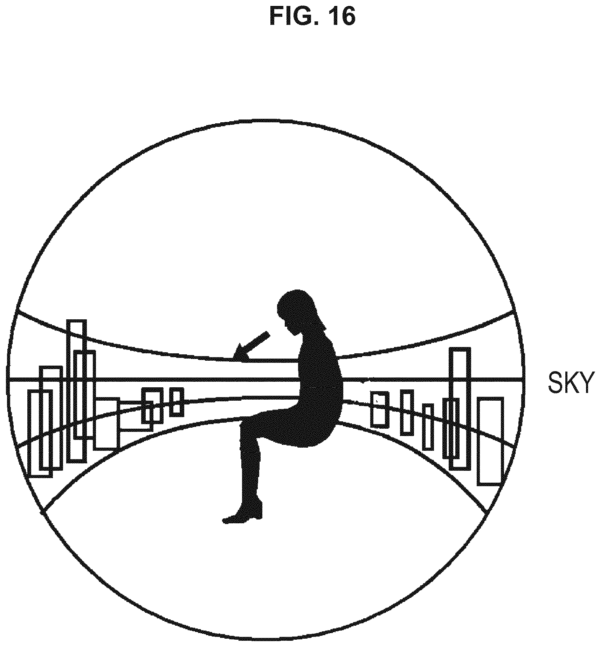

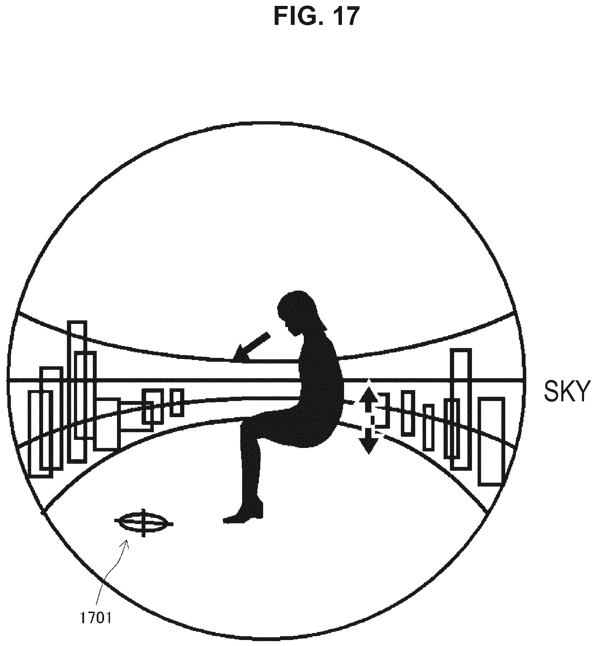

Also, as illustrated in FIG. 16, a user (Ghost) looking at a view from the sky in the VR space faces down while remaining in a seated posture. Subsequently, as illustrated in FIG. 17, on the ground of the VR space, a target mark 1701 appears in the line-of-sight direction of the user. In this way, in the case in which the target mark 1701 is displayed, if the user additionally performs the "jump action" of making short up-and-down motions of the torso, the VR space switches to a view on the ground, dropped down on the spot where the target mark 1701 is displayed.

### E-3. Microjump UI

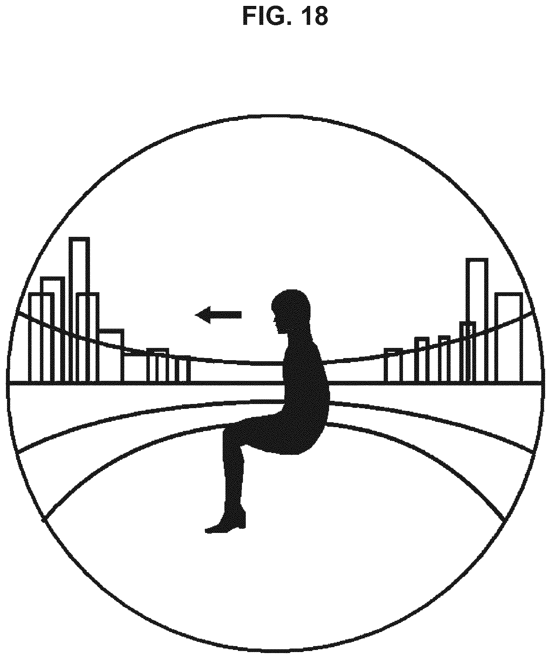

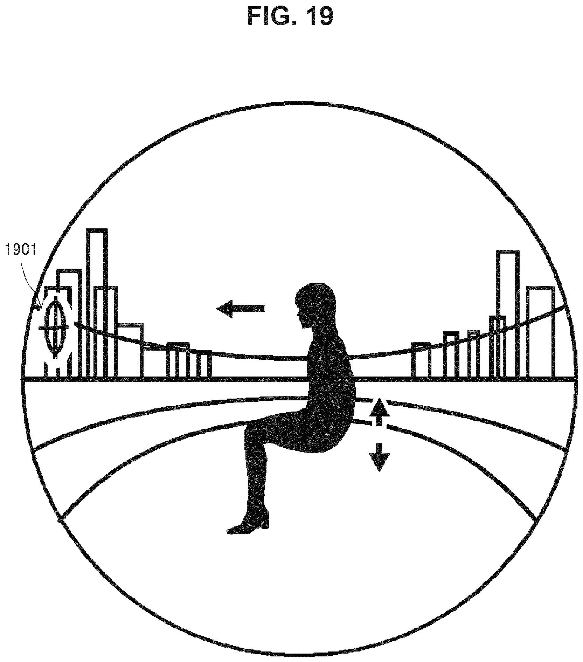

As illustrated in FIG. 18, a user (Ghost) looking at a view on the ground (or from the sky) in the VR space faces to the front while remaining in a seated posture. Subsequently, as illustrated in FIG. 19, a target mark 1901 appears in front (ahead by a predetermined distance) in the VR space. In this way, in the case in which the target mark 1901 is displayed, if the user additionally performs the "jump action" of making short up-and-down motions of the torso, the VR space switches to a view (not illustrated) that has jumped (instantaneously moved) to the spot where the target mark 1901 is displayed.

### E-4. Measures to prevent camera view loss when jumping

In the case of implementing the jump UI as illustrated in FIGS. 14 to 17 or the microjump UI as illustrated in FIGS. 18 and 19, if the view of the VR space presented to the user (Ghost) is switched instantaneously, the user may become unable to recognize where one is in the VR space (spatial loss), or become unable to discern which direction one is facing (directional loss), and the problem of camera view loss is a concern.

Accordingly, to prevent camera view loss when jumping, measures like those given below may also be taken. In the case of displaying the VR space using a dome-type display, measures like the following are easy to realize inside a dome partitioned off from the outside world.

(1) A wind (head wind) is made to blow from the direction in which the user jumps (for example, the spot where the target mark appears), thereby preventing camera directional loss.
(2) Effect lines such as concentration lines are displayed from the direction in which the user jumps (for example, the spot where the target mark appears), or some other comic book-style expression is adopted in the VR space, thereby preventing camera directional loss.
(3) Camera directional loss is prevented by visual effects causing objects such as tree leaves and pieces of paper to blow from the direction in which the user jumps (for example, the spot where the target mark appears).
(4) When switching the camera view in response to the jump UI, blur (motion blur) is applied to eliminate a sense of discomfort and also prevent camera directional loss.
(5) When the user looks down at the VR space from the sky (see FIG. 16, for example), camera spatial loss is prevented by casting a shadow on the ground.

### Industrial Applicability

The foregoing thus describes the technology disclosed in this specification in detail and with reference to specific embodiments. However, it is obvious that persons skilled in the art may make modifications and substitutions to these embodiments without departing from the spirit of the technology disclosed in this specification.

The technology disclosed in the present specification can be utilized for purposes such as, for example, work assistance in a variety of industrial fields, like a medical site of a surgical operation, a construction site of construction work, the piloting of airplanes and helicopters, navigation for drivers of automobiles, instruction and coaching in sports, and the like, nursing care assistance, temporary staffing, and VR viewing (for example, concerts and watching sports events, or use on social network services (SNS)).

Further, in the present specification, an embodiment of a system in which a Ghost who shares a first-person image of a Body who acts on a site with his/her body intervenes in a visual or auditory sensation, or the like of the Body has been mainly described. However, the scope of the technology disclosed in the present specification is not limited thereto. It is also possible to apply the technology disclosed in the present specification to various information processing devices for displaying, on vision of a certain person, information regarding assistance, instruction, guidance, and navigation from another person.

The technology disclosed in the present specification can be utilized as a means of issuing an instruction to move in a VR space by a viewer who views a VR space such as a first-person view on a dome-type display, for example. Obviously, even in the case of viewing a VR space on a head-mounted display or some other type of display device, the technology disclosed in the present specification can be applied similarly.

Essentially, the technology disclosed in this specification has been described by way of example, and the stated content of this specification should not be interpreted as being limiting. The spirit of the technology disclosed in this specification should be determined in consideration of the claims.

Additionally, the technology disclosed in the present specification can also be configured as below.
(1) An information processing device including:
   a detection unit configured to detect an action of a user; and
   an input unit configured to input an instruction to move from the user in a VR space on a basis of the detected action.
(2) The information processing device according to (1), in which
   the detection unit detects an action while the user remains in a seated posture, and
   the input unit inputs the instruction to move in the VR space on a basis of the action while the user remains in the seated posture.
(3) The information processing device according to (2), in which
   the input unit inputs an instruction to move in a direction in which a head or a torso of the user is tilted.
(4) The information processing device according to any of (1) to (3), in which
   the input unit inputs, as an instruction to move to a sky, an action of the user facing up and also making an up-and-down motion of a torso.
(5) The information processing device according to any of (1) to (4), in which
   the input unit inputs an action of the user facing down and also making an up-and-down motion of a torso while in a sky of the VR space as an instruction to move to a ground.
(6) The information processing device according to any of (1) to (5), in which
   the input unit inputs an action of the user facing to a front and also making an up-and-down motion of a torso as an instruction to move in a frontal direction.
(7) The information processing device according to any of (1) to (6), further including:
   a display unit configured to display an image of a VR space.
(8) The information processing device according to (7), in which
   the display unit switches a view of the VR space on a basis of the instruction to move input by the input unit.
(9) The information processing device according to (7), in which
   the display unit displays a target mark in a direction in which the user faces, the direction being detected by the detection unit.
(10) The information processing device according to (9), in which
   the input unit inputs, as an instruction to move to a spot where the target mark is displayed, an action of the user making an up-and-down motion of a torso, and
   the display unit makes a switch to a view of the spot where the target mark is displayed.
(11) The information processing device according to any of (8) or (10), in which
   the display unit displays a predetermined effect line when switching the view.
(12) The information processing device according to (10), in which
   the display unit imparts a visual effect originating from the target mark when switching the view.
(13) The information processing device according to any of (8) or (10), in which
   the display unit applies blur when switching the view.
(14) The information processing device according to (7), in which
   the display unit displays a shadow on a ground when the user looks down at the VR space from a sky.
(15) An information processing method including:
   a detection step of detecting an action of a user; and
   an input step of inputting an instruction to move from the user in a VR space on a basis of the detected action.

### Reference Signs List

- 100: visual information sharing system
- 101: image provision device
- 102: image display device
- 501: imaging unit
- 502: image processing unit
- 503: display unit
- 504: first audio output unit
- 505: drive unit
- 506: second audio output unit
- 507: position detection unit
- 508: communication unit
- 509: control unit
- 510: authentication unit
- 511: communication unit
- 512: image decoding unit
- 513: display unit
- 514: user input unit
- 515: position/posture detection unit

## Claims

1. An information processing device comprising:
a detection unit configured to detect an action of a user; and
an input unit configured to input an instruction to move from the user in a VR space on a basis of the detected action.

2. The information processing device according to claim 1, wherein
the detection unit detects an action while the user remains in a seated posture, and
the input unit inputs the instruction to move in the VR space on a basis of the action while the user remains in the seated posture.

3. The information processing device according to claim 2, wherein
the input unit inputs an instruction to move in a direction in which a head or a torso of the user is tilted.

4. The information processing device according to claim 1, wherein
the input unit inputs, as an instruction to move to a sky, an action of the user facing up and also making an up-and-down motion of a torso.

5. The information processing device according to claim 1, wherein
the input unit inputs an action of the user facing down and also making an up-and-down motion of a torso while in a sky of the VR space as an instruction to move to a ground.

6. The information processing device according to claim 1, wherein
the input unit inputs an action of the user facing to a front and also making an up-and-down motion of a torso as an instruction to move in a frontal direction.

7. The information processing device according to claim 1, further comprising:
a display unit configured to display an image of a VR space.

8. The information processing device according to claim 7, wherein
the display unit switches a view of the VR space on a basis of the instruction to move input by the input unit.

9. The information processing device according to claim 7, wherein
the display unit displays a target mark in a direction in which the user faces, the direction being detected by the detection unit.

10. The information processing device according to claim 9, wherein
the input unit inputs, as an instruction to move to a spot where the target mark is displayed, an action of the user making an up-and-down motion of a torso, and
the display unit makes a switch to a view of the spot where the target mark is displayed.

11. The information processing device according to claim 8, wherein
the display unit displays a predetermined effect line when switching the view.

12. The information processing device according to claim 10, wherein
the display unit imparts a visual effect originating from the target mark when switching the view.

13. The information processing device according to claim 8, wherein
the display unit applies blur when switching the view.

14. The information processing device according to claim 7, wherein
the display unit displays a shadow on a ground when the user looks down at the VR space from a sky.

15. An information processing method comprising:
a detection step of detecting an action of a user; and
an input step of inputting an instruction to move from the user in a VR space on a basis of the detected action.
